**Europäisches Patentamt**

(19) **European Patent Office**

**Office européen des brevets**

(11) Publication number : **0 360 319 B1**

(12) # EUROPEAN PATENT SPECIFICATION

(45) Date of publication of patent specification :
**25.11.92 Bulletin 92/48**

(51) Int. Cl.⁵ : **E21B 29/10, B23P 11/02,**
**F16L 55/162, E21B 33/138**

(21) Application number : **89202197.3**

(22) Date of filing : **30.08.89**

(54) Method for placing a body of shape memory material within a cavity.

(30) Priority : **31.08.88 GB 8820608**

(43) Date of publication of application :
**28.03.90 Bulletin 90/13**

(45) Publication of the grant of the patent :
**25.11.92 Bulletin 92/48**

(84) Designated Contracting States :
**DE FR GB IT NL**

(56) References cited :
**WO-A-82/01489**

(56) References cited :
**WO-A-85/00870**
**CH-A- 611 994**
**DE-A- 3 544 128**
**US-A- 2 977 994**
**US-A- 3 364 993**
**US-A- 4 379 575**

(73) Proprietor : **SHELL INTERNATIONALE**
**RESEARCH MAATSCHAPPIJ B.V.**
**Carel van Bylandtlaan 30**
**NL-2596 HR Den Haag (NL)**

(72) Inventor : **Pelgrom, Jacob Jan**
**Volmerlaan 6**
**NL-2288 GD Rijswijk (NL)**

# Description

The invention relates to a method for placing a body of shape memory material within a cavity.

It is known from German patent specification 3544128 to provide a pipe connection by means of a sleeve of a shape memory material which is stretched before installation while it is kept at a low temperature and which is subsequently heated so as to raise its temperature to above a phase transition temperature of the memory material thereby causing the sleeve to shrink around the pipeline ends which are to be interconnected.

In many situations, however, the pipe exterior may be inaccessible, for example if the pipe forms part of a subsurface tubular string used for the production of hydrocarbons from a well Furthermore it may be needed to install a body of shape memory material inside an uncased borehole or other cavity against the surrounding earth formation. Then there is a need to transport a body of shape memory material over a substantial distance through the interior of a cavity and then place it at a desired location within the cavity.

US patent No. 4 379 575 discloses a method to establish a connection between two pipes using a body of shape memory material. The body of shape memory material is cooled to below its transition temperature and moved through each pipe over a short distance until approximately one half of the body extends into the pipe, whereafter the body reverts to its expanded shape. The known method is not suitable for moving the body of shape memory material through a cavity in the form of a wellbore in an earth formation over a relatively large distance, which cavity has a temperature increasing with depth, because during such movement the temperature of the body would prematurely raise to above the transition temperature thereby causing the body to revert to the expanded shape prematurely.

Swiss patent No. 611 994 discloses a running device with a body attached thereto, which device is moved through a conduit and retrieved from the conduit after the body has been detached from the device.

Accordingly, it is an object of the present invention to provide a method for placing a body of shape memory material in a cavity whilst avoiding that the body gets entangled during its transportation into the cavity.

The method according to the invention comprises:

- bringing the body of shape memory material into an expanded shape which is tailored to the use of the body within said cavity while the body is at a temperature above a phase transition temperature of the memory material,
- cooling the body of shape memory material to a temperature below said transition temperature,
- deforming the body of shape memory material to a condensed shape which allows free movement of the body through said cavity,
- moving the body of shape memory material through said cavity while maintaining the shape memory material at a temperature below said transition temperature,
- manoeuvring the body to a location in said cavity where the body of shape memory material is to be placed, and
- heating the body to above said transition temperature and allowing the shape memory material to revert to said expanded shape, characterized in that the cavity forms a wellbore in the earth formation, that said body is moved through the cavity by moving a running device with the body attached thereto through the cavity, which running device is provided with cooling means for cooling said body, that the temperature of said body is maintained below the transition temperature during movement of the body through the cavity by activating said cooling means, and that the running device is retrieved from the cavity after the body reverts to said expanded shape.

It is to be understood that in this specification and in the claims the term cavity refers to a cased or uncased borehole that has been drilled into subsurface formations for the production of hydrocarbons.

Preferably the body of memory material includes a plate of a memory metal or alloy, which plate is before its transportation into the cavity deformed by scrolling, bending or folding it to such a condensed shape that the external width of the deformed plate is smaller than the internal width of the cavity and the entrance of the cavity.

Preferably the method according to the invention comprises the steps of:

- pre-shaping a construction incorporating a plate of shape memory material, while its temperature is above said transition temperature, to such a substantially tubular shape that after installation the construction tends to expand against the inner wall of the cavity,
- scrolling the construction around a section of a running device while its temperature is held below said transition temperature and moving the device into the cavity,
- heating the construction to above said transition temperature so as to induce the construction to expand against the inner wall of the cavity at the location where it is to be placed, and
- detaching the running device from the expanded construction.

In an alternative embodiment of the invention a tubular body of shape memory material is after cooling it to below the phase transition temperature deformed by folding it into a corrugated shape around the running device in order to create sufficient clearance between the deformed body of shape memory material and the entrance of the cavity during its transport into the cavity. At the location inside the cavity where the body is to be installed it is heated to above the phase transition temperature so that the body unfolds itself again and reverts to its original tubular shape.

In the context of this specification and the claims a memory material is defined as a material which changes of shape at a certain transition temperature. Memory materials are described in U.S. patent Nos. 3,012,882; 3,174,851; 3,351,463; 3,567,523; 3,753,700; 3,783,037; 4,036,669 and 4,146,392.

Many of the memory materials described in these patents consist of memory metals or alloys which undergo at the transition temperature a phase transformation from a martensitic state into an austenitic state and vice versa. As described in these patents for certain compositions of the memory material the transition temperature is formed by a temperature range within which the memory material gradually changes of shape due to a gradual phase transformation. Usually the body of memory material is pre-shaped while in the austenitic state, then cooled until it undergoes a martensitic transition and subsequently deformed while maintained in the martensitic state. When the body is heated to above the transition temperature the body will revert to its original, pre-shaped, configuration.

It will be understood that a body of memory material may contain other materials than a pure memory metal or alloy. The body may for example consist of a composite material or a laminate built up of alternating layers of a memory metal and of another material.

The invention will now be explained in more detail with reference to the accompanying drawings, in which

Figure 1 shows a running device carrying a scrolled construction of shape material inside a cavity,

Figure 2 shows the device of Figure 1 when seen in cross-section along line II-II, and

Figure 3 shows in cross-section a running device carrying a folded construction of shape memory material.

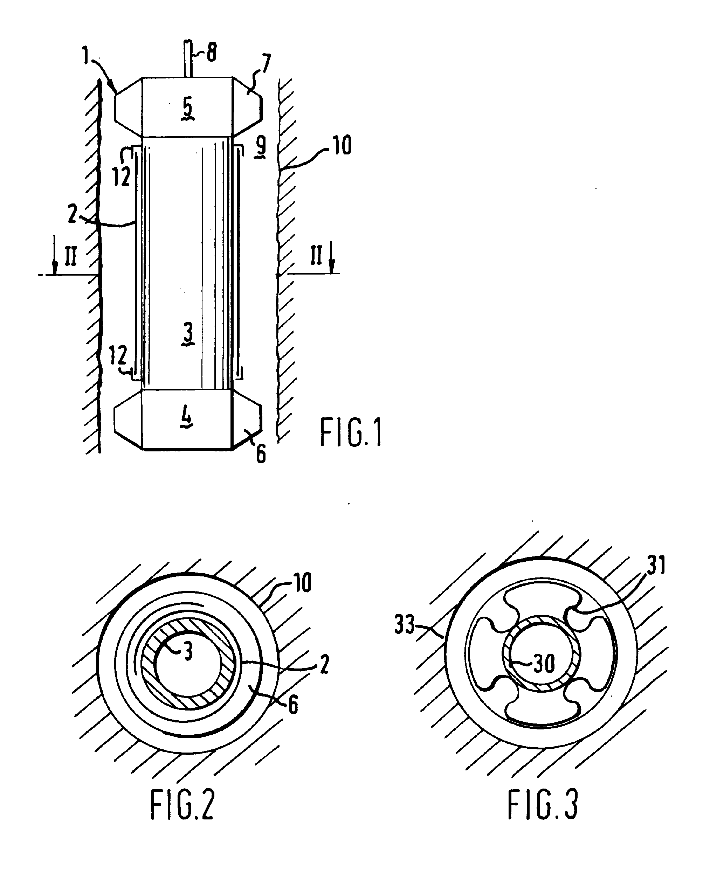

Referring now to Figure 1 there is shown a running device 1 which carries a scrolled construction 2 of shape memory material.

The running device 1 comprises a cylindrical mid section 3 and two end sections 4 and 5 around which protecting stabilizers 6 and 7 are secured. The running device 1 is suspended from a wireline 8 inside a tubular cavity 10 such as a borehole or tubular string. Alternatively the running device may be carried by or form part of a pipe string such as a string of drill pipes or small size continuous tubing.

The stabilizers 6 and 7 protect the construction of shape memory material from contact with the cavity wall during the descent of the device to the location where the construction 2 is to be installed. During the descent the construction 2 is scrolled around the cylindrical mid section 3 of the running device 1 and possibly held in place by clamps 12 which are also made of shape memory material.

The procedure for securing the construction 2 of shape memory material around the running device 1 before lowering the device into the borehole 9 and the procedure for detaching the construction 2 from the device 1 when the device 1 has arrived at the location where the construction 2 is to be placed is as follows.

At the surface the construction 2 of shape memory material is brought into an expanded shape which corresponds roughly to the contour of the borehole section or tubular string where the construction is to be placed. This may be accomplished by scrolling a rectangular plate of shape memory material around a cylindrical element which has a diameter corresponding to the internal width of the borehole or tubular string. During the above step of pre-shaping the shape memory material the construction 2 is held at a temperature above the austenitic/martensitic transition temperature. This transition temperature can be influenced by varying the composition of the shape memory material. For applications in a hydrocarbon production well the transition temperature will generally be set somewhere between about 50° and 100 °C, depending upon the actual location of placement and utilization of the construction of shape memory material in the well.

After the above step of pre-shaping the construction 2 is cooled to below said austenitic/martensitic transition temperature.

Now the shape memory material is in the martensitic phase and can easily be deformed and scrolled around the cylindrical section 3 of the running device 1 in the manner as shown in Fig. 2.

In the same manner, when necessary, clamps 12 of a memory material are pre-shaped such that they allow release of the construction whilst the clamps 12 are deformed after cooling them down to below the austenitic/martensitic transition temperature into the shape shown in Figure 1 in which they are clamped around the construction 2.

Subsequently the running device 1 is lowered into the borehole 9 while its temperature is maintained below the austenitic/-martensitic transition temperature. When the running device 1 is positioned at the location where the construction 2 is to be placed the running device may be heated e.g. by a directly or indirectly electrically driven heater or a microwave source (not shown) to above the austenitic/martensitic transition temperature of the memory material. This causes the clamps 12 to be released from the construction 2 and the construction 2 to unfold to its expanded shape against the wall of the cavity 10.

Sealing of the expanded construction 2 against the borehole wall 10 can be accomplished in various ways. A socket (not shown) of a flexible material may surround at least the end portions of the construction 2, which socket is impregnated with a suitable bonding agent, such as EPIKOTE. After expansion of the construction 2 against the wall of the cavity the bonding agent is releaesed from the socket and provides a permanent fixation of the construction inside the cavity.

Alternatively some form of bonding agent may be directly applied to the outer surface of the construction 2 which agent only gets its glueing properties after a prolonged contact with mud or a specially circulated fluid. The bonding agent may also be of the type which gets its bonding properties when subjected to a high temperature or of a two component type which becomes active when the second component is freed by e.g. the hydrostatic pressure of the borehole fluid. Instead, the bonding agent may be of a soft metal type through which metal-to-metal sealing characterics can be derived from a predetermined constrained expansion of the shape memory material construction.

The construction of shape memory material may be placed across a zone of a borehole where the borehole wall is fractured and where loss of drilling fluid into the formation takes place or formation water flows into the borehole. During drilling through such fractured formations the running device 1 may be included in a drill string and if drilling fluid losses occur the construction is positioned across the loss zone and secured to the borehole wall by lowering a heating tool (not shown) through the drill string to heat the device 1 to the temperature at which the shape memory material becomes in its austenitic phase. The strength of the bonding agent should be sufficient to temporarily withstand the pressure difference between the formation fluids and borehole fluids until the borehole is cased-off. Furthermore it should also be able to withstand impacts from drill string stabilizers while drilling or tripping, while allowing the drillstring downhole tools to be retracted from the borehole through the expanded construction.

Besides the above described utilization of a construction of shape memory material as a patch-while-drilling (PWD) tool there are numerous other applications where placement of a construction of shape memory material inside a cavity may be needed, such as:
- downhole repair of a corroded oil or gas production tubing,
- downhole shut-off of watered out or sand producing zones while maintaining access to deeper producing zones of an oil or gas reservoir,
- repair of environmentally inaccessible flow- or bulk oil or gas transfer lines,
- placement of a through-tubing bridge plug in a well,
- repair of a failed latch in a dual string well completion, and
- repair inside inaccessible surface equipment such as replacement of a heating coil inside a reactor vessel of a gasplant.

It will be understood that instead of scrolling the shape memory material around a cylindrical section of the running device 1 it may be secured thereto in any other suitable manner.

Figure 3 shows an embodiment where a running device 30 carries an originally tubular body 31 of shape memory material, which body is while it is in the martenitic phase deformed by folding it into a concavo convex corrugated shape around the device 30. When the running device 30 has reached the location where the body 31 of shape memory material is to be placed it is heated so as to induce the body of shape memory material to revert to its originally tubular shape which is tailored to the internal width of the borehole 33.

Instead of the particular shape shown in the drawing the body of shape memory material may have any other suitable shape, depending upon the type of operations in which it is utilized. The memory material may for example be lowered through a well at the lower end of a running device for use as a fishing tool to retrieve lost equipment from a well. In that case the body of shape memory material is manoeuvred around or if possible within or over the top of the lost equipment and subsequently heated so as to deform and firmly grip the equipment, whereupon the running device together with the equipment is retrieved from the well.

The running device may be provided with cooling and/or heating means. The cooling means may be activated to maintain the shape memory material in the martensitic phase while the device is moved into the cavity whereas the heating means are activated when the device has reached the location where the body of shape memory material is to be placed in order to bring the shape memory material in the austenitic phase.

If the running device is moved from an environment where the temperature is below the austenic/martensitic transition temperature of the shape memory material into a cavity where the temperature is just above said temperature the heat inertia of the running device may be utilized to maintain the shape memory material in the martensitic phase during transport and to allow its transition into the austenitic phase after having reached the location where it is to be placed. The running device may be cooled during its transport through the cavity by filling it with blocks of melting ice so as to avoid expansion of the memory material before it has arrived at the location where it is to be placed.

From the above description it will become apparent to those skilled in the art that apart from the embodiments shown in the drawings there are numerous possible modifications of the procedure for placing a body of shape memory material inside a cavity. Accordingly it should be understood that the embodiments of the present invention shown in the drawings are illustrative only.

## Claims

1. A method for placing a body of shape memory material within a cavity, the method comprising:
   - bringing the body (2,31) of shape memory material into an expanded shape which is tailored to the use of the body (2,31) within said cavity (10,33) while the body (2,31) is at a temperature above a phase transition temperature of the memory material,
   - cooling the body (2,31) of shape memory material to a temperature below said transition temperature,
   - deforming the body (2,31) of shape memory material to a condensed shape which allows free movement of the body (2,31) into the cavity (10,33),
   - moving the body (2,31) of shape memory material through said cavity (10,33) while maintaining the shape memory material at a temperature below said transition temperature,
   - manoeuvring the body (2,31) to a location in said cavity (10,33) where the body (2,31) of shape memory material is to be placed, and
   - heating the shape memory material to above said transition temperature and allowing the shape memory material to revert to said expanded shape,
   characterized in that the cavity (10,33) forms a wellbore in the earth formation, that said body (2,31) is moved through the cavity (10,33) by moving a running device (1,30) with the body (2,31) attached thereto through the cavity (10,33), which running device (1,30) is provided with cooling means for cooling said body (2,31), that the temperature of said body (2,31) is maintained below the transition temperature during movement of the body (2,31) through the cavity (10,33) by activating said cooling means, and that the running device (1,30) is retrieved from the cavity (10,33) after the body (2,31) reverts to said expanded shape.

2. The method of claim 1 wherein the cavity (10,33) and its entrance have a substantially tubular shape and the body of memory material comprises a plate of memory metal, which plate is before its transportation into the cavity (10,33) deformed by scrolling, bending or folding it to such a condensed shape that the external width of the deformed plate is smaller than the internal width of the cavity (10,33) and its entrance.

3. The method of claim 2 comprising the steps of:
   - pre-shaping a construction (2) comprising a plate of shape memory material, while its temperature is above said transition temperature, to such a substantially tubular shape that after installation the construction tends to expand against the inner wall of the cavity (10,33),
   - scrolling the construction (2) around a cylindrical section (3) of a running device (1) while its temperature is held below said transition temperature and moving the device (1) into the cavity,
   - heating the construction (2) to above said transition temperature so as to induce the construction (2) to expand against the inner wall of the cavity (10) at the location where it is to be placed, and
   - detaching the running device (1) from the expanded construction (2).

4. The method of claim 3, wherein the cavity (10) forms part of a subterranean oil or gas production well and the running device (1) is equipped with protecting stabilizer blades (6,7) which are mounted above and below said cylindrical section (3) and a pair of clamps (12) which fix the construction (2) of memory material in its scrolled shape during the descent of the device (1) into the well, and wherein the step of detaching the running device (1) from the construction (2) comprising a plate of shape memory material is carried out by removing the clamps (12) from the construction (2) when the running device (1) has reached the location where the construction (2) is to be installed.

5. The method of claim 3 wherein the construction (2,31) is heated to a temperature above said transition range by heating means in the running device (1,30) after the device (1,30) has reached the location where the construction (2,31) is to be installed.

6. The method of claim 3 wherein after expanding the construction (2,31) of shape memory material against the inner wall of the cavity (10,33) the construction (2,31) is secured to said wall by activating a bonding agent carried by the construction (2,31).

7. The method of claim 6 wherein the bonding agent comprises EPIKOTE which is impregnated in a flexible socket that surrounds at least part of the scrolled construction (2,31) during its transportation into the cavity (10,33).

8. The method of claim 3 wherein the step of pre-shaping the construction (2,31) of shape memory material consists of scrolling the plate of shape memory material around a cylindrical element which has a diameter which is similar to the diameter of the cavity (10,33) in which the construction (2,31) of shape memory material is to be placed.

9. The method of claim 2 wherein the body (31) of memory material is pre-shaped such that it has a tubular shape whereupon it is after cooling it to a temperature below the transition temperature deformed by folding it into a corrugated shape, lowered into a well (33) and again heated to a temperature above the transition temperature so as to allow the body (31) of shape memory material to revert to its tubular shape.

**Patentansprüche**

1. Verfahren zum Einbringen eines Körpers aus Formgedächtnismaterial in einen Hohlraum, wobei dieses Verfahren aus folgende Schritten besteht:
    - Bringen des Körpers (2, 31) aus Formgedächtnismaterial in eine ausgedehnte Form, die für die Anwendung des Körpers (2, 31) in dem Hohlraum (10, 33) maßgeschneidert ist, während der Körper (2, 31) eine Temperatur aufweist, die über einer Phasenübergangstemperatur des Formgedächtnismaterials liegt,
    - Kühlen des Körpers (2, 31) aus Formgedächtnismaterial auf eine Temperatur, die unter dieser Übergangstemperatur liegt,
    - Verformen des Körpers (2, 31) aus Formgedächtnismaterial auf eine zusammengedrückte Form, die eine freie Beweglichkeit des Körpers (2, 31) im Hohlraum (10, 33) ermöglicht,
    - Bewegen des Körpers (2, 31) aus Formgedächtnismaterial durch diesen Hohlraum (10, 33), während das Formgedächtnismaterial auf einer Temperatur unter dieser Übergangstemperatur gehalten wird.
    - Einrichten des Körpers (2, 31) an einen Ort in diesem Hohlraum (10, 33), wo der Körper (2, 31) aus Formgedächtnismaterial eingesetzt werden soll, und
    - Erwärmen des Formgedächtnismaterials auf eine Temperatur über der obigen Übergangstemperatur und Zulassen, daß das Formgedächtnismaterial wieder seine ausgedehnte Form annimmt,
dadurch gekennzeichnet, daß der Hohlraum (10, 33) ein Bohrloch in einer Erdformation ist, daß der Körper (2, 31) durch Bewegen einer Laufvorrichtung (1, 30) mit dem daran befestigten Körper (2, 31) durch den Hohlraum (10, 33) bewegt wird, wobei die Laufvorrichtung (1, 30) mit Kühlmitteln zum Kühlen dieses Körpers (2, 31) versehen ist, daß die Temperatur dieses Körpers (2, 31) während der Bewegungen des Körpers (2, 13) durch den Hohlraum (10, 33) durch Aktivieren der Kühlmittel auf einer Temperatur unterhalb der Übergangstemperatur gehalten wird, und daß die Laufvorrichtung (1, 30), nachdem der Körper (2, 31) seine ursprüngliche, ausgedehnte Form wieder angenommen hat, aus dem Hohlraum (10, 33) herausgezogen wird.

2. Verfahren gemäß Anspruch 1, in dem der Hohlraum (10, 33) und sein Eingang im wesentlichen Rohrform aufweisen und der Körper aus Formgedächtnismaterial eine Platte aus Metall mit Erinnerungsvermögen aufweist, die vor ihrem Transport in diesen Hohlraum (10, 33) durch Wickeln, Biegen und/oder Falten zu einer so zusammengedrückten Form verformt wird, daß die äußere Breite der verformten Platte kleiner ist als die innere Breite des Hohlraums (10, 33) und seines Eingangs.

3. Verfahren gemäß Anspruch 2, das die folgenden Schritte beinhaltet:
    - Vorformen einer Konstruktion (2), enthaltend eine Platte aus einem Formgedächtnismaterial, während ihre Temperatur über dieser Übergangstemperatur liegt, zu einem im wesentlichen rohrförmigen Gebilde, so daß sich die Konstruktion nach dem Einbau ausdehnt und an die Innenwand des Hohlraums (10, 33) anlegt,
    - Wickeln der Konstruktion (2) um einen zylinderförmigen Abschnitt (3) der Laufvorrichtung (1) während ihre Temperatur unter dieser Übergangstemperatur gehalten wird, und Bewegen der Vorrichtung (1) in den Hohlraum,
    - Erwärmen der Konstruktion (2) auf eine Temperatur über dieser Übergangstemperatur, um damit die Konstruktion (2) zu veranlassen, sich an der Stelle, an der sie eingesetzt werden soll, gegen die Innenwand der Höhlung (10) auszudehnen, und
    - Abkuppeln der Laufvorrichtung (1) von der ausgedehnten Konstruktion (2).

4. Verfahren gemäß Anspruch 3, bei dem der Hohlraum (10) Teil einer unterirdischen Öl- oder Gasförderquelle ist und die Laufvorrichtung (1) mit Schutzstabilisatorblättern (6, 7), die über bzw. unter diesem zylindrischen Abschnitt (3) angeordnet sind, und mit ein paar Klammern (12), die die Konstruktion (2) aus Formgedächtnismaterial während des Absenkens der Vorrichtung (1) in das Bohrloch in ihrem aufgewickelten Zustand festhalten, ausgerüstet ist, und in dem der Schritt des Abkuppelns der Laufvorrichtung (1) von der Konstruktion (2), die eine Platte aus Formgedächtnismaterial enthält, durch Abnehmen der Klammern (12) von der Konstruktion (2) ausgeführt wird, sobald die Laufvorrichtung (1) die Stelle erreicht hat, wo die Konstruktion (2) eingesetzt werden soll.

5. Verfahren gemäß Anspruch 3, in dem die Konstruktion (2, 31) durch Heizmittel in der Laufvorrichtung auf eine Temperatur über dem Umwandlungsbereich aufgeheizt wird, nachdem die Vorrichtung (1, 30) den Ort erreicht hat, an dem die Konstruktion (2, 31) eingebaut werden soll.

6. Verfahren gemäß Anspruch 3, in dem nach dem Ausdehnen der Konstruktion (2, 31) aus Formgedächtnismaterial gegen die Innenwand des Hohlraums (10, 33) die Konstruktion (2, 31) durch Aktivieren eines von der Konstruktion (2, 31) mitgeführten Haftmittels an dieser Wand befestigt wird.

7. Verfahren gemäß Anspruch 6, in dem das Haftmittel EPIKOTE enthält, mit dem ein flexibler Ansatz imprägniert ist, der die aufgewickelte Konstruktion (2, 31) während des Transports in den Hohlraum (10, 33) wenigstens teilweise umgibt.

8. Verfahren gemäß Anspruch 3, in dem der Schritt des Vorformens der Konstruktion (2, 31) aus Formgedächtnismaterial aus dem Aufwickeln einer Platte aus Formgedächtnismaterial um ein Zylinderelement besteht, das einen ähnlichen Durchmesser wie der Hohlraum (19, 33) aufweist, in dem die Konstruktion (2, 31) aus Formgedächtnismaterial eingesetzt werden soll.

9. Verfahren gemäß Anspruch 2, in dem der Körper (31) aus Formgedächtnismaterial so vorgeformt wird, daß er eine Rohrform aufweist, während er nach dem Abkühlen auf eine Temperatur, die unter der Übergangstemperatur liegt, durch Wickeln in eine geriffelte Form verformt wird, durch Absenken in eine Öhlbohrung (33) eingeführt, und dann wieder auf eine über der Übergangstemperatur liegende Temperatur erwärmt wird, damit der Körper (31) aus Formgedächtnismaterial wieder seine Rohrform annehmen kann.

## Revendications

1. Un procédé pour placer un corps constitué d'un matériau à mémoire de forme dans une cavité, le procédé consistant à :

   - amener le corps (2, 31) constitué d'un matériau à mémoire de forme dans une forme expansée qui est adaptée à l'utilisation du corps (2, 31) à l'intérieur de ladite cavité (10, 33) pendant que le corps (2, 31) se trouve à une température supérieure à une température de transition de phase du matériau à mémoire de forme,

   - refroidir le corps (2, 31) constitué du matériau à mémoire de forme jusqu'à une température inférieure à ladite température de transition,

   - déformer le corps (2, 31) en matériau à mémoire de forme jusqu'à une forme contractée qui permet un libre mouvement du corps (2, 31) dans la cavité (10, 33),

   - déplacer le corps (2, 31) en matériau à mémoire de forme dans ladite cavité (10, 33) tout en maintenant le matériau à mémoire de forme à une température inférieure à ladite température de transition,

   - diriger le corps (2, 31) jusqu'en un endroit de ladite cavité (10, 33) où le corps (2, 31) en matériau à mémoire de forme doit être placé, et

   - chauffer le matériau à mémoire de forme au-dessus de ladite température de transition et laisser le matériau à mémoire de forme revenir à ladite forme expansée,

   - caractérisé en ce que la cavité (10, 33) forme un forage dans la formation de terre, en ce que ledit corps (2, 31) est déplacé dans la cavité (10, 33) en déplaçant un dispositif de transport (1, 30), sur lequel est fixé le corps (2, 31), dans la cavité (10, 33), en ce que le dispositif de transport (1, 30) est pourvu de moyens de refroidissement pour refroidir ledit corps (2, 31), en ce que la température dudit corps (2, 31) est maintenue en dessous de la température de transition pendant un mouvement du corps (2, 31) dans la cavité (10, 33) par activation desdits moyens de refroidissement, et en ce que le dispositif de transport (1, 30) est enlevé de la cavité (10, 33) après que le corps (2, 31) est revenu à ladite forme expansée.

2. Le procédé selon la revendication 1, dans lequel la cavité (10, 33) et son entrée ont une forme sensiblement tubulaire et le corps en matériau à mémoire de forme comprend une plaque constituée d'un métal à mémoire de forme, ladite plaque, avant son transport dans la cavité (10, 33) étant déformée par enroulage, cintrage ou pliage jusqu'à une forme contractée telle que la largeur extérieure de la plaque déformée soit plus petite que la largeur intérieure de la cavité (10, 33) et de son entrée.

3. Le procédé selon la revendication 2, comprenant les étapes consistant à :

- préformer une structure (2) comprenant une plaque constituée d'un matériau à mémoire de forme, pendant que sa température est supérieure à ladite température de transition, jusqu'à une forme sensiblement tubulaire telle que, après installation, la structure ait tendance à se dilater contre la paroi intérieure de la cavité (10, 33),

- enrouler la structure (2) autour d'une section cylindrique (3) d'un dispositif de transport (1) pendant que sa température est maintenue en dessous de ladite température de transition et déplacer le dispositif (1) dans la cavité,

- chauffer la structure (2) au-dessus de ladite température de transition de façon à produire une expansion de la structure (2) jusque contre la paroi intérieure de la cavité (10) à l'endroit où elle est placée, et

- détacher le dispositif de transport (1) de la structure expansée (2).

4. Le procédé selon la revendication 3, dans lequel la cavité (10) fait partie d'un puits souterrain de production de pétrole ou de gaz et le dispositif de transport (1) est équipé de lames stabilisatrices de protection (6, 7) qui sont montées au-dessus et en dessous de ladite section cylindrique (3), et d'une paire d'attaches (12) qui fixent la structure (2) en matériau à mémoire de forme dans sa forme rétractée pendant la descente du dispositif (1) dans le puits, et dans le procédé, l'étape de détachement du dispositif de transport (1) par rapport à la structure (2) comprenant une plaque constituée d'un matériau à mémoire de forme est effectuée en enlevant les attaches (12) de la structure (2) quand le dispositif de transport (1) a atteint l'endroit où la structure (2) doit être installée.

5. Le procédé selon la revendication 3, dans lequel la structure (2, 31 ) est chauffée à une température supérieure à ladite gamme de transition par des moyens de chauffage prévus dans le dispositif de transport (1, 30) après que le dispositif (1, 30) a atteint l'endroit où la structure (2, 31) doit être installée.

6. Le procédé selon la revendication 3, dans lequel, après expansion de la structure (2, 31) constituée d'un matériau à mémoire de forme contre la paroi intérieure de la cavité (10, 33), la structure (2, 31) est fixée sur ladite paroi par activation d'un agent de liaison porté par ladite structure (2, 31).

7. Le procédé selon la revendication 6, dans lequel l'agent de liaison comprend le produit EPIKOTE qui est imprégné dans une enveloppe flexible qui entoure au moins une partie de la structure enroulée (2, 31) pendant son transport dans la cavité (10, 33).

8. Le procédé selon la revendication 3, dans lequel l'étape de préformage de la structure (2, 31) constituée d'un matériau à mémoire de forme consiste à enrouler la plaque en matériau à mémoire de forme autour d'un élément cylindrique qui a un diamètre semblable au diamètre de la cavité (10, 33) où la structure (2, 31) en matériau à mémoire de forme doit être placée.

9. Le procédé selon la revendication 2, dans lequel le corps (31) en matériau à mémoire de forme est préformé de telle sorte qu'il ait une forme tubulaire et ensuite, après refroidissement jusqu'à une température inférieure à la température de transition, il est déformé par pliage jusqu'à un profil ondulé, il est descendu dans un puits (33) et est à nouveau chauffé à une température supérieure à la température de transition de façon à permettre au corps (31) en matériau à mémoire de forme de revenir à sa forme tubulaire.

FIG.1

FIG.2

FIG.3